# EUROPEAN PATENT APPLICATION

(11) **EP 2 738 035 A1**
(43) Date of publication of application: **04.06.2014**
(21) Application number: 12194525.7
(22) Date of filing: 28.11.2012
(51) Int. Cl.: B60L 11/18, H02J 3/00, H02J 3/32, H02J 7/02, H02J 7/34

(54) **A method and an arrangement for controlling power supply in an electric mining unit, and a method for controlling power supply in a mining unit, as well as a mining unit**

(71) Applicant: Sandvik Mining and Construction Oy, 33330 Tampere (FI)
(72) Inventor: Kouhia, Samuli, 33330 Tampere (FI); Kouvo, Mikko, 33330 Tampere (FI)
(74) Representative: Smolander, Jouni Juhani

(57) **Abstract**

The invention relates to a method for controlling the supply of electric power to an electric mining unit intended for the processing of rock material, in which method, by means of a three-phase electric power network (2) provided in the mining unit and a mains switch (2') for connecting the mining unit to or for disconnecting it from an external electric power network (2"), and a power source (7), as well as at least one inverter (8, 8') and at least one transformer (14) and switches (3, 4, 5, 16, 17), the supply of electric power to the mining unit is controlled in such a way that when the electric power network (2) of the mining unit is connected to the external electric power network (2"), the first electric motor (9) and the second electric motor (13) are supplied from the external electric power network (2") or from the power source, and the power source (7) is simultaneously charged for at least part of the time from the external electric power network (2") by means of the inverter and the transformer or a charging system (15), and that when the second electric motor (13) is supplied from the external electric power network (2"), the first electric motor (9) is simultaneously supplied, if necessary, solely from the power source (7) provided in the mining unit, by means of the inverter (8). The invention also relates to an arrangement and a mining unit.

## Description

### Background of the invention

The invention relates to a method for controlling power supply in an electric mining unit, such as, for example, a loader or a drilling unit. The invention also relates to an arrangement for controlling the power supply in an electric mining unit.

The invention also relates to a mining unit.

In modern electric mining units, for example loaders, i.e. mining units intended for handling, such as loading and transferring, of rock, the power transmission, which is typically hydrodynamic power transmission, includes a torque converter as an integral element between the power engine and the gear system. The torque converter is used for adapting the rotational speed of the power engine to the need of the load. Furthermore, the torque converter makes it possible to approximately double the torque, particularly at low speeds of the mining unit, for example when stockpiling with the mining unit. At high speeds, the converter can be locked, which corresponds to a fixed coupling between the input and the output.

The power engine of the electric mining unit is an electric motor which typically rotates at an almost constant speed with respect to the frequency of the electric power network.

The electric mining unit, such as a loader or a drilling unit, is normally connected by a cable to a supply power network, wherein its operation is continuously dependent on electric power supplied from the network. The mining unit can also be implemented in such a way that in the case of short transfers it is supplied from a power source, such as an accumulator. In practice, this means that electric mining units, such as loaders, have to be hauled, at least in the case of long transfers, for which it is not worthwhile to construct a supply power network, because the mining unit does not normally operate in such locations. Therefore, the aim is to keep the supply voltage as high as possible, to minimize losses and the cross-sectional area of the cable.

For adjusting the rotational speed of electric motors used in mining units, such as loaders, a frequency converter is needed for adapting the frequency of the supply voltage to the desired rotational speed of the electric motor. In theory, the frequency converter can be used for obtaining the torque at the rated load of the motor from zero to the rated speed. Normally, the overload allowance of the frequency converter allows an about 1.5-fold torque for a minute at intervals of ten minutes. Commonly available frequency converters which are suitable for mobile use, for example for mining machine use, are typically limited to a given maximum voltage. Consequently, in a system with e.g. a higher voltage level, the mining unit would first have a transformer for reducing the voltage of the electric power network, after which the frequency converter could be coupled. In a mining unit with a high output, the voltage-reducing transformer would become quite large.

A known solution for supplying power to a mining vehicle is disclosed, for example, in document FI20086134. The document describes a method and an arrangement for using a mining unit, that is, a mining vehicle. According to the method disclosed in the document, an energy storage in the mining vehicle is used as the power source during transfer drives, and this energy storage is charged during the work cycle with electric power obtained from an external electric power network.

Another known solution is disclosed in document FI20096403. The solution according to the document discloses a method for supplying power to a mining vehicle, as well as a mining vehicle applying the method.

The known solutions involve some disadvantages.

Among other things, the known solutions generally involve the drawback that the torque converter commonly used in them increases the output torque, but thus the losses are also significantly increased and the efficiency is reduced. Furthermore, oil circulating in the converter has to be cooled efficiently because of thermal losses.

Another drawback in known solutions is the fact that they set high demands on the external electric power network, because their power consumption from the external electric power network is high, particularly when the mining unit, such as a loader, is in a situation of loading, that is, stockpiling, the total output of the mining unit reaching its maximum. Some mines have weak electric power networks, and it is thus difficult or even impossible to use the solutions of prior art in such mines because of the restrictions set by the electric power network. More generally, driving of a mining unit, such as stockpiling by a loader (so-called loading situation at a pile) cannot be controlled in an efficient and energy saving way with the solutions of prior art.

### Brief summary of the invention

It is an aim of the present invention to provide a solution, by which it is possible to avoid the above described drawbacks of prior art and to provide a functional arrangement and method for controlling power supply in an electric mining unit.

The method according to the invention is characterized in that by means of a three-phase electric power network arranged in the mining unit and a mains switch for connecting the mining unit to or for disconnecting it from an external electric power network, and a power source, as well as at least one inverter and at least one transformer and switches, the supply of electric power to the mining unit is controlled in such a way that when the electric power network of the mining unit is connected to the external electric power network, the first electric motor and the second electric motor are supplied from the external electric power network or from the power source, and simultaneously the power source is charged for at least part of the time from the external electric power network by means of the inverter and the transformer or a charging system, and that when the second electric motor is supplied from the external electric power network, the first electric motor is simultaneously supplied, if necessary, solely from the power source arranged in the mining unit, by means of the inverter.

An embodiment of the method according to the invention is characterized in that when the second electric motor, intended for supplying the energy needed for the actuators of the mining unit, is supplied from the external electric power network, the electric motor needed for moving the mining unit is simultaneously supplied, if necessary, solely from the power source arranged in the mining unit, by means of the inverter.

An embodiment of the method according to the invention is characterized in that the mining unit is moved, if necessary, by means of the power source arranged in the mining unit and at least one inverter or charging system, without supplying the electric motors from the external electric power network.

An embodiment of the method according to the invention is characterized in that at least one electric motor is supplied from a power source which is an accumulator, a capacitor, a supercapacitor, a fuel cell, or a combination of these.

An embodiment of the method according to the invention is characterized in that in inverter use, the electric motor intended for transferring the mining unit is controlled by a constant flux, the torque of the electric motor being thus substantially constant, and the motor voltage is thus changed in relation to the supply frequency.

An embodiment of the method according to the invention is characterized in that in inverter use, the torque converter in the mining unit is locked for a desired period of time.

An embodiment of the method according to the invention is characterized in that the electric motors in combination or separately are supplied with either a constant frequency or a variable frequency.

The arrangement according to the invention is characterized in that the arrangement provided in the mining unit comprises at least a three-phase electric power network and a power switch for connecting the mining unit to an external electric power network or for disconnecting it from the external electric power network, and at least one transformer, as well as a power source provided in the mining unit, and at least one inverter connected to the power source, as well as switches, by means of which switches the power supply to the mining unit is controllable in such a way that when the electric power network of the mining unit is connected to the external electric power network, the electric motors can be supplied from the external electric power network or power source, and simultaneously the power source can be charged for at least part of the time from the external electric power network by means of the inverter and the transformer or a charging system, and that when the second electric motor is supplied from the external electric power network, the first electric motor can be simultaneously supplied, if necessary, solely from the power source provided in the mining unit by means of the inverter.

An embodiment of the arrangement according to the invention is characterized in that the mining unit can be transferred, if necessary, by means of the power source provided in the mining unit without connecting the power network of the mining unit to the external electric power network.

An embodiment of the arrangement according to the invention is characterized in that when the electric motor intended for supplying power needed by the actuators of the mining unit is supplied from the external electric power network, the electric motor needed for transferring the mining unit can be simultaneously supplied solely from the power source provided in the mining unit, or from the external electric power network.

An embodiment of the arrangement according to the invention is characterized in that at least one electric motor can be supplied from the power source via a charging system.

An embodiment of the arrangement according to the invention is characterized in that the supply of electric power to the electric motors from the external electric power network or the power source can be controlled by means of three or more switches.

An embodiment of the arrangement according to the invention is characterized in that the power source is an accumulator, a capacitor, a supercapacitor, a fuel cell, or a combination of these.

An embodiment of the arrangement according to the invention is characterized in that the mining unit comprises a torque converter which can be locked at least when the electric motor needed for transferring the mining unit is supplied from the power source.

An embodiment of the arrangement according to the invention is characterized in that the control of electric power supply from the electric power network or the power source to the electric motors of the mining unit by means of switches is automated.

An embodiment of the arrangement according to the invention is characterized in that the electric motors in combination or separately can be supplied with either a constant frequency or a variable frequency.

An embodiment of the arrangement according to the invention is characterized in that the electric power network is an electric busbar system.

The method and the arrangement according to the invention have several advantages to the solutions of prior art. Some advantages of the method and the arrangement according to the invention are listed below.

The solution according to the invention makes it possible to drive the mining unit in a controlled and energy saving way.

The solution according to the invention makes it possible to transfer the mining unit merely by the energy of the power source, such as a set of accumulators.

With the arrangement according to the invention, the total maximum output of the mining unit (the total maximum output needed) is reduced. The reduction in the maximum output is useful, because a significant number of mines conventionally have weak power supply networks.

With the arrangement according to the invention, the cross-sectional areas of the supply cable of the mining unit can be reduced, wherein it is possible to make the cable stronger or to increase the length of the cable with a cable drum of the same size.

### Brief description of the drawings

The solution according to the invention will be explained in more detail with reference to the appended drawings 1 to 8, in which:
Figure 1 shows the output and input power curves for a torque converter for an electric mining unit of prior art; that is, the output and input power of the torque converter represented as a function of the speed ratio.
Figure 2 also shows the torque curves of a known torque converter; that is, the (input/output) torques of the torque converter represented as a function of the speed ratio.
Figure 3 shows the electric power of a known mining unit, that is, the total power taken from the electric power network as a function of time.
Figure 4 shows an arrangement according to the invention (a situation, in which the mining unit is connected to the external electric power network).
Figure 5 shows an arrangement according to the invention (a situation, in which the mining unit is not connected to the external electric power network).
Figure 6 shows an arrangement according to the invention (a situation in which the mining unit is connected to the external electric power network and the electric motors are supplied from both the network and the power source).
Figure 7 shows an arrangement according to the invention (a situation, in which the mining unit is not connected to the external electric power network).
Figure 8 shows an arrangement according to the invention in its simplest form (without a charging system).

### Detailed description of the invention

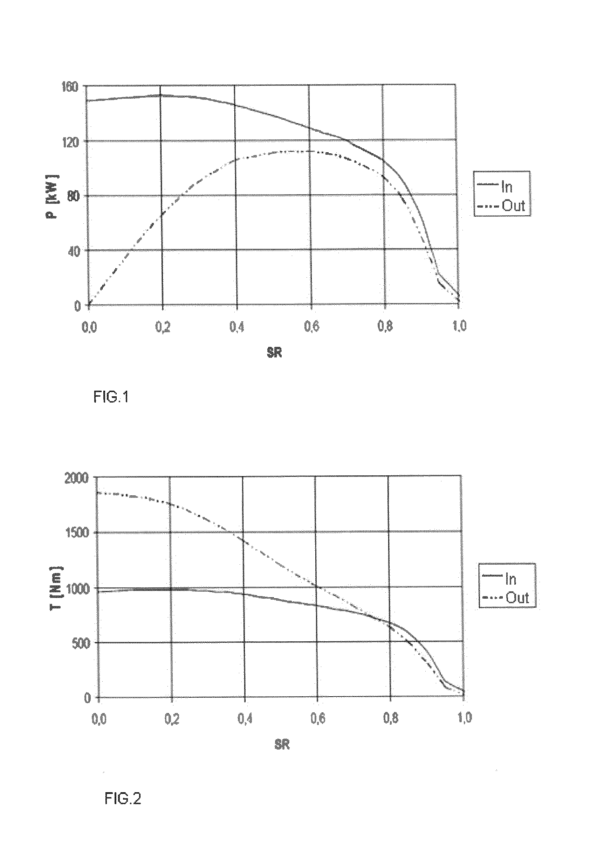

Figure 1 shows the output and input power curves for a torque converter for an electric mining unit, such as a loader; that is, the output and input power of the torque converter represented as a function of the speed ratio. On the horizontal axis, SR (speed ratio) refers to the speed ratio of the converter between the output and the input. For example, when the rotational speed of the electric motor is 1500 rpm (rotations per minute) and the SR is 0.2, the rotational speed at the output of the converter is about 300 rpm. The driving speed of the device is thus 1/5 of the maximum speed of the gear in use. The output of the electric motor is, however, at the maximum, although in theory, so much power would not be needed from the electric machine.

Figure 2 shows the torque curves of a torque converter. The figure shows an increase in the output torque at a low speed ratio. The input torques (in) and the output torques (out) of the torque converter are shown as a function of the speed ratio.

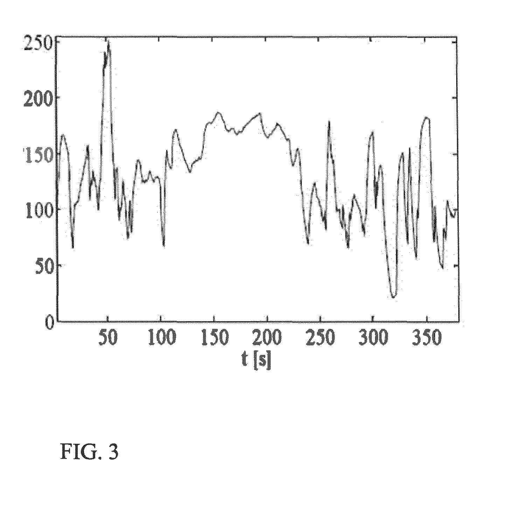

Figure 3 shows the electric power of a mining unit, where a considerable power peak is seen at about 50 s in a situation (e.g. a loading situation of a loader).

When the electric motor has to be driven at high power even at low speeds of the device, this will also result in thermal losses in the motor.

For example, in the case of stockpiling with a loader at a low speed, a high power is also required of the working hydraulics of the bucket of the mining unit, whereby the total power of the mining unit is at its maximum. This total maximum power determines the capacity of the mining unit as well as the supplying network.

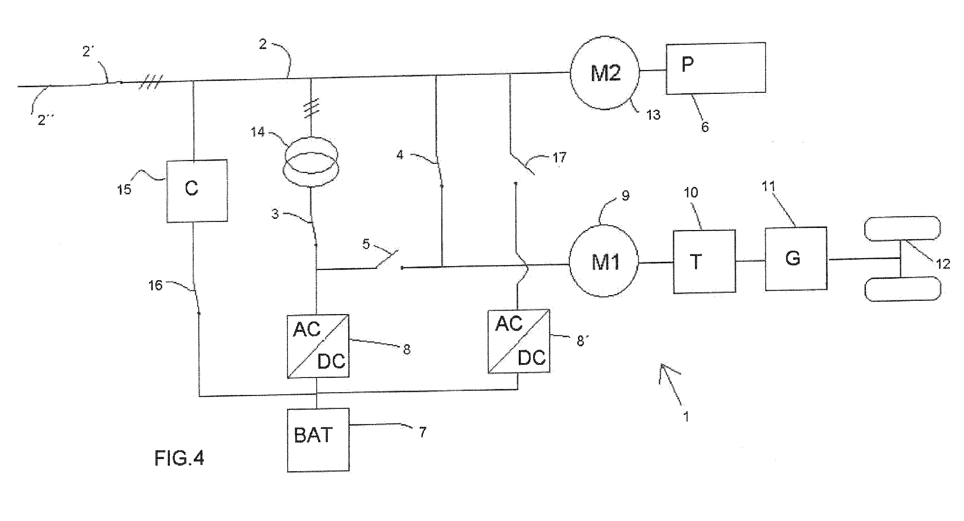

Figure 4 shows an arrangement 1 according to the invention for controlling the power supply to an electric mining unit intended for the manipulation of rock material, by which arrangement it is possible to control the electrical power supply to at least one first electric motor 9 provided in the mining unit and intended for transferring it, as well as a second electric motor 13 intended for supplying the power needed for actuators 6 (such as e.g. the hydraulics of the bucket of the loading machine, including pumps and actuators). In the arrangement according to the invention, with reference to Fig. 1, the torque converter is indicated with the reference numeral 10 and the gear system with the reference numeral 11, and the equipment (i.e. tyres/shafts) needed for the power transmission of the mining machine with the reference numeral 12.

The arrangement 1 provided in the mining unit comprises at least a three-phase electric power network 2, such as an electric busbar system/electric cable system, in the mining unit, and a mains switch 2' for connecting the mining unit to or disconnecting it from an external electric power network 2", and at least one transformer 14, as well as a power source 7 provided in the mining unit, and at least one inverter 8, 8' connected to the power source 7, as well as switches 3, 4, 5, 16, 17, by means of which switches the power supply to the mining unit can be controlled. The switches function in such a way that the switch 3 switches on/off the connection between the power source 7 of the mining unit and the three-phase electric power network/busbar system 2, and the switch 4 switches on/off the connection between the electric motor 9 and the electric power network 2. Correspondingly, the switch 5 switches on/off the connection between the inverter 8 coupled to the power source 7, and the electric motor 9. The switch 16 can be used to switch on/off the connection between a charging system 15 and the power source 7. Furthermore, a switch 17 is needed between the supply to the electric motor 13 (the three-phase power network/electric busbar system 2 at the top) and the inverter 8', so that the typical supply voltage of 1000 VAC would not break the inverter 8' of e.g. 500 VAC when the mining unit is connected to the external network. When the electric motor 13 is driven with the inverter 8', there is no connection to the external electric power network 2".

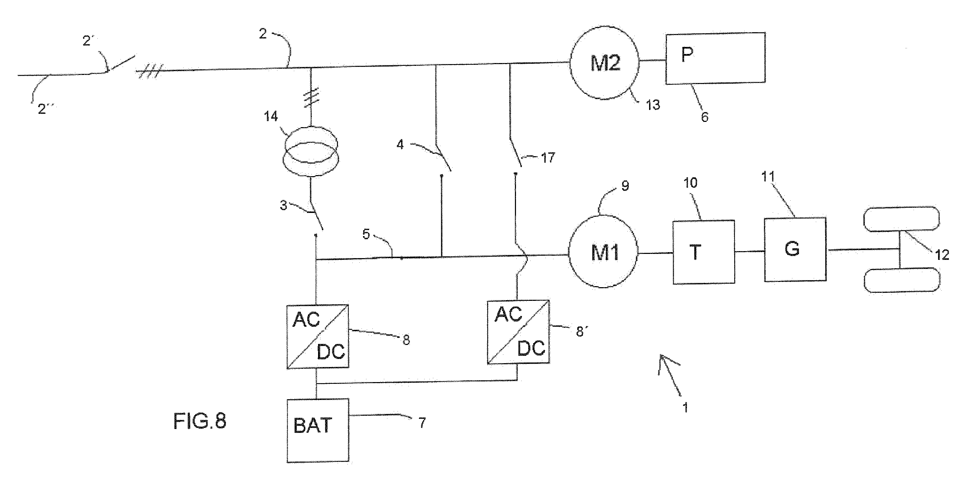

With the arrangement according to the invention, when the electric motor 13 intended for supplying energy needed by the actuators 6 of the mining unit is supplied from the external electric power network 2", the electric motor 9 needed for transferring the mining unit can be simultaneously supplied from the power source 7 provided in the mining unit or from the external electric power network 2", and on the other hand, when the electric power supply to the electric motors 9, 13 is only provided from the external electric power network 2", the power source 7 can be charged for at least part of the time by means of the transformer 14 and the inverter 8, or alternatively by means of a separate charging system 15 (provided in the mining unit). The arrangement according to the invention can also be implemented possibly without the charging system 15 (such a solution is shown in Fig. 8), and thus the accumulator is only charged by means of the transformer 14 and the inverter 8 (or, for example, several transformers/inverters).

With the arrangement according to the invention, the mining unit can be transferred, if necessary, solely by means of the power source 7 provided in the mining unit, without connecting the electric power network of the mining unit to the external electric power network 2", and this will be described in more detail below in the description of the method according to the invention, in which method the above-described arrangement is applied.

In the method according to the invention and with further reference to Fig. 1, it shows a situation in which, the electrical power network 2 of the mining unit being connected to the external electric power network 2", the electric motors 9, 13 are supplied from the external electric power network 2" or from the power source 7, and the power source 7 is simultaneously charged for at least part of the time from the external electric power network 2" by means of the inverter 8 and the transformer 14 or a separate charging system 15.

In the situation of Fig. 1, the electric motors are charged at a constant frequency.

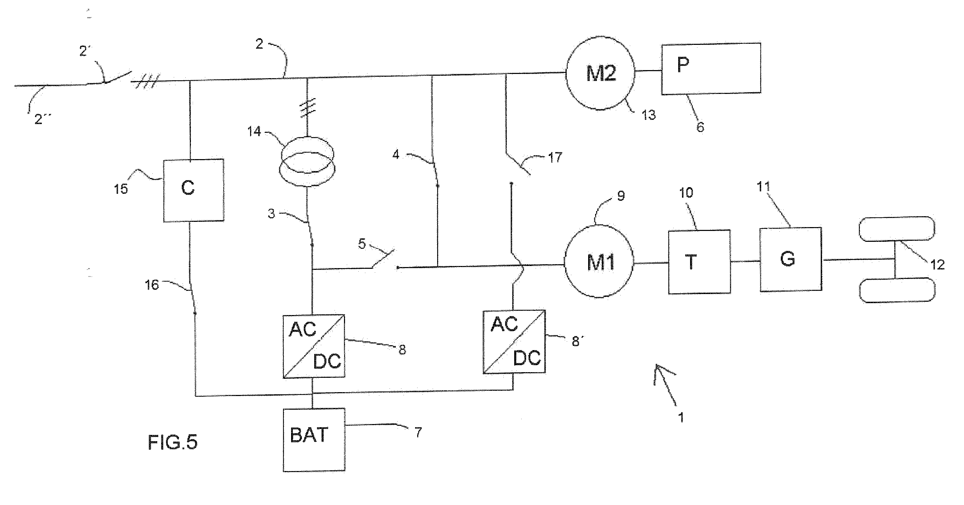

Figure 5 shows a situation, in which the electric power network/electric busbar system 2 is not connected to the external electric power network 2"; in other words, the electric motors 9, 13 of the mining unit are not supplied with electric power from an external electric power network. Thus, the mining unit is transferred, if necessary, by means of the power source 7 provided in the mining unit and by means of at least one inverter 8 or charging system 15, without supplying the electric motors 9, 13 from the external electric power network 2'. Consequently, the charging system 15 can be used either for charging the power source 7 or for supplying the electric motor/motors 9, 13. In the situation of Fig. 2, the electric motors are supplied with a constant frequency.

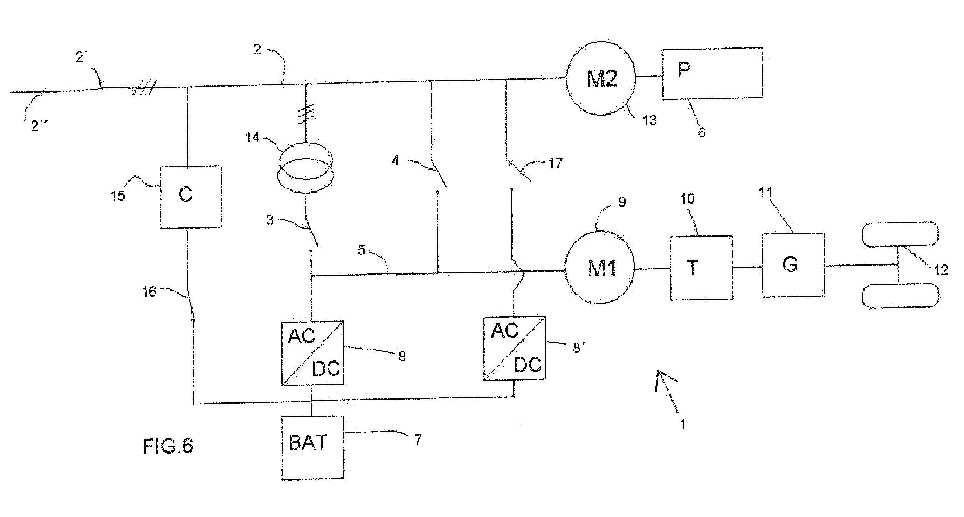

Figure 6 shows a situation in which the electric power network 2 of the mining unit is connected to the external electric power network 2", and the electric motor 9 is supplied from the power source 7 via the inverter 8, the switch 5 being turned on, and further, the supply to the electric motor 13 is provided from the external electric power network 2" via the electric power network/busbar system 2 of the mining unit. The situation shown in the figure corresponds to driving of the mining unit, where the mining unit is driven slowly and the output in the inverter is sufficient for slow speeds of the motor and also for producing a high torque. The supply to the electric motor 9 is provided by the inverter at a variable frequency, and the voltage is typically 500 VAC at the most, but it can also have a different value. Correspondingly, the supply to the electric motor 13 is provided from the external electric power network 2" at a constant frequency.

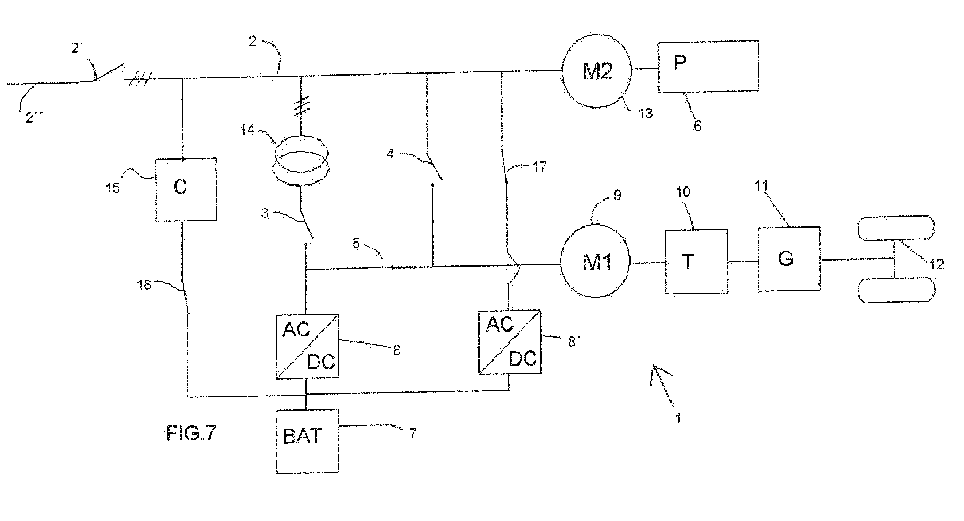

Figure 7 shows a situation in which the mining unit is off the external electric power network 2"; in other words, its electric power network 2 is not connected to the external electric power network, and the supply to the electric motors 9, 13 is provided from the power source 7 via at least one inverter 8 or 8' or both inverters. The situation of Fig. 7 can be, for example, a transfer of the mining unit, whereby the power source is used for driving, for example, to another working level in a mine. The power supply to the electric motors 9 and 13 is provided by the inverters 8, 8' at a variable frequency.

Figure 8 shows an arrangement according to the invention in its simplest form without a charging system, and thus the power source 7 is only charged by means of the transformer 14 and the inverter 8.

By the above-described method according to the invention, the mining unit can be transferred desired distances (transfer distances) by the power of the accumulator. This facility, *i.e*. the possibility of transferring the mining unit by means of the power source, is needed particularly when moving to a new mining area, as well as when a cable is broken in a difficult place where the mining unit would obstruct other machines, preventing or hindering their movement.

In a loading situation, the speed of the mining unit is normally low. Thus, the first gear of the mining unit is used, the maximum speed corresponding to a given rotational speed at the input of the gear system, which is simultaneously the rated rotational speed of the electric machine. When the torque converter is locked, the driving speed in a loading situation corresponds to a given relatively low rotational speed of the shaft of the electric motor. In inverter use, the motor is controlled by a constant flow, wherein the torque of the moment is constant and the motor voltage is changed in relation to the input frequency (∼rotational speed).

In a loading situation, the torque demand is approximately twice the rated torque of the electric motor needed for moving the mining unit (and produced by means of the torque converter). The electric motor can be instantaneously overloaded, so that by the above-described arrangement, utilizing this property, the torque needed in the loading situation is achieved when the torque converter is locked. The electric power needed in the loading situation in inverter use is directly proportional to the rotational speed. If the speed is low and the torque needed is twice the rated torque of the motor of the electric mining machine, this will only correspond to about 30 to 40% of the power taken by the electric motor in mining machines when stockpiling.

When the second electric motor (that is, the driving motor) is driven by means of the inverter with the torque control by the arrangement according to the invention, it is possible *e.g*. in a loading situation to control the movement of the mining unit very accurately and simultaneously to maximize the tractive force delivered from the tyres of the mining unit to the ground. The precise control also makes it possible to implement automatic filling of the bucket of the loader.

When the mining unit is moved merely by means of the power source, hydraulics is used primarily for controlling the steering cylinders (not shown in the figures) intended for turning the mining unit, wherein the hydraulic power of these actuators is supplied from a pump connected to the assembly of the frequency converter and the motor presented in said invention.

In the above description and the drawings, the invention is merely described by way of example and it is not in any way limited to it. The different details of the embodiments can be implemented in various ways and they can also be combined with each other.

In the solution according to the invention, the power source can be an accumulator, a capacitor, a supercapacitor, a fuel cell, or, for example, a combination of these.

In the solution according to the invention, the supply of electric power to the mining unit from the electric power network or the power source to the electric motors of the mining unit can be automated, and the electric motors of the mining unit in combination or separately can be supplied with either a constant frequency or a variable frequency.

The electric power network of the mining unit described in the solution according to the invention can be, for example, an electrical busbar system, or it can be an electrical power network formed of electric cables, or a combination of these is also feasible.

The arrangement according to the invention is not limited to a given mining unit but it can be applied in, for example, a loader, a drilling unit or another mining unit, which mining unit may comprise various drives/actuators.

## Claims

1. A method for controlling the supply of electric power to an electric mining unit intended for the processing of rock material, in which method the supply of electric power to at least a first electric motor (9) and a second electric motor (13) provided in the mining unit is controlled during the operation of the mining unit, **characterized in that**
by means of a three-phase electric power network (2) provided in the mining unit and a mains switch (2') for connecting the mining unit to or for disconnecting it from an external electric power network (2"), and a power source (7), as well as at least one inverter (8, 8') and at least one transformer (14) and switches (3, 4, 5, 16, 17), the supply of electric power to the mining unit is controlled in such a way that
i) when the electric power network (2) of the mining unit is connected to the external electric power network (2"), the first electric motor (9) and the second electric motor (13) are supplied from the external electric power network (2") or from the power source, and the power source (7) is simultaneously charged for at least part of the time from the external electric power network (2") by means of the inverter and the transformer or a charging system (15), and that
ii) when the second electric motor (13) is supplied from the external electric power network (2"), the first electric motor (9) is simultaneously supplied, if necessary, solely from the power source (7) arranged in the mining unit, by means of the inverter (8).

2. The method according to claim 1, **characterized in that** when the second electric motor (13) intended for supplying the energy needed for the actuators (6) of the mining unit is supplied from the external electric power network (2"), the electric motor (9) needed for moving the mining unit is simultaneously supplied, if necessary, solely from the power source (7) provided in the mining unit, by means of the inverter (8).

3. The method according to claim 1, **characterized in that** the mining unit is moved, if necessary, by means of the power source (7) provided in the mining unit and at least one inverter (8) or charging system, without supplying the electric motors (9, 13) from the external electric power network (2").

4. The method according to claim 1, **characterized in that** the electric motors in combination or separately are supplied with either a constant frequency or a variable frequency.

5. An arrangement for controlling the supply of electric power to an electric mining unit intended for the processing of rock material, by which arrangement at least a first electric motor (9) and a second electric motor (13) provided in the mining unit can be controlled during the operation of the mining unit, **characterized in that**
the arrangement (1) provided in the mining unit comprises at least a three-phase electrical power network and a power switch (2') for connecting the mining unit to or for disconnecting it from an external electric power network (2"), and at least one transformer (14), as well as a power source (7) provided in the mining unit, and at least one inverter (8, 8') connected to the power source, as well as switches (3, 4, 5, 16, 17), by means of which switches the power supply to the mining unit is controllable in such a way that when the electrical power network (2) of the mining unit is connected to the external electric power network (2"), the electric motors (9, 13) can be supplied from the external electric power network (2") or the power source (7), and the power source (7) can be simultaneously charged for at least part of the time from the external electric power network (2") by means of the inverter and the transformer or a charging system (15), and that when the second electric motor (13) is supplied from the external electric power network (2"), the first electric motor (9) can be simultaneously supplied, if necessary, solely from the power source (7) provided in the mining unit by means of the inverter (8).

6. The arrangement according to claim 5, **characterized in that** the mining unit can be moved, if necessary, solely by means of the power source (7) provided in the mining unit, without connecting the electric power network (2) of the mining unit to the external electric power network (2").

7. The arrangement according to claim 5, **characterized in that** when the electric motor (13) intended for supplying the energy needed for the actuators (6) of the mining unit is supplied from the external electric power network (2"), the electric motor (9) needed for moving the mining unit is simultaneously supplied, if necessary, solely from the power source (7) arranged in the mining unit or from the external electric power network (2").

8. The arrangement according to claim 5, **characterized in that** at least one electric motor (9, 13) can be supplied from the power source (7) via a charging system (15).

9. The arrangement according to claim 5, **characterized in that** the supply of electric power to the electric motors (9, 13) from the external electric power network (2") or from the power source (7) can be controlled by means of three or more switches.

10. The arrangement according to claim 5, **characterized in that** the power source (7) is an accumulator, a capacitor, a supercapacitor, a fuel cell, or a combination of these.

11. The arrangement according to claim 5, **characterized in that** the mining unit comprises a torque converter (10) which can be locked at least when the electric motor (9) needed for moving the mining unit is supplied from the power source (7).

12. The arrangement according to claim 5, **characterized in that** the control of electric power from the electric power network (2) or from the power source (7) to the electric motors (9, 13) of the mining unit by means of switches is automated.

13. The arrangement according to claim 5, **characterized in that** the electric motors in combination or separately can be supplied with a constant frequency or a variable frequency.

14. The arrangement according to claim 5, **characterized in that** the electric power network is an electric busbar system.

15. A mining unit, **characterized in that** the mining unit comprises an arrangement according to any of the claims 5 to 14.
